# EUROPÄISCHE PATENTSCHRIFT

(11) **EP 4 007 096 B1**
(45) Veröffentlichungstag und Bekanntmachung des Hinweises auf die Patenterteilung: **13.08.2025**
(21) Anmeldenummer: 21208897.5
(22) Anmeldetag: 18.11.2021
(51) Int. Cl.: H02G 3/06, H02G 3/04, H02G 3/38

(54) **AN EINER BEGRENZUNGSFLÄCHE EINES GEBÄUDES FESTLEGBARES KABELRINNENSYSTEM**
CABLE CHANNEL SYSTEM FIXED TO A BOUNDARY SURFACE OF A BUILDING
SYSTÈME DE CHEMIN DE CÂBLES POUVANT ÊTRE FIXÉ SUR UNE SURFACE DE LIMITATION D'UN BÂTIMENT

(30) Priorität: 25.11.2020 DE 202020106764 U
(43) Veröffentlichungstag der Anmeldung: 01.06.2022
(73) Patentinhaber: OBO Bettermann Hungary Kft, 2347 Bugyi (HU)
(72) Erfinder: Dobóczi, Zsolt János, 1239 Budapest (HU); Sebök, Ference, 1237 Budapest (HU)
(74) Vertreter: Haverkamp Patentanwälte PartG mbB

(56) Entgegenhaltungen:
- EP-B1- 0 731 996
- EP-B1- 2 590 281
- CH-A5- 654 449
- DE-B1- 1 615 982
- KR-A- 20060 058 230
- KR-A- 20160 054 685
- US-A- 1 676 486
- US-A1- 2007 044 988

## Beschreibung

Die Erfindung betrifft ein an einer Begrenzungsfläche eines Gebäudes, etwa eines Bodens, festlegbares Kabelrinnensystem, umfassend mindestens zwei miteinander längsseitig zu verbindende, jeweils zwei Seitenwandholme und ein die Seitenwandholme verbindendes Bodenblech umfassende Kabelrinnen und einen an der Begrenzungsfläche festlegbaren, die Stöße der beiden Kabelrinnen überspannenden Rinnenverbinder.

Aus Kabelrinnen werden Leitungsführungskanäle bzw. Kabeltragsysteme erstellt. Die Kabelrinnen dienen zur Aufnahme von Kabeln zur Übermittlung von elektrischer Energie und/oder Daten. Aufgenommen können in einer solchen Kabelrinne daher beispielsweise Kupferkabel oder auch Glasfaserkabel sein. Kabelrinnensysteme werden unter anderem bodenseitig verlegt, beispielsweise im Estrich oder unter einer Hohlbodenkonstruktion. Hierbei ist es erforderlich, dass die einzelnen Kabelrinnen mit dem Unterboden, der in diesem Falle eine Begrenzungsfläche eines Gebäudes darstellt, verbunden sind. Um dieses zu erreichen, werden gemäß einer ersten vorbekannten Ausgestaltung bügelartige Rinnenverbinder verwendet. Diese sind nach Art eines U-Profils ausgeführt. Mit ihrem U-förmigen Abschnitt umgreifen diese Rinnenverbinder die aneinander herangeführten Stöße zweier Kabelrinnen von oben und sind somit über das Deckelteil geführt. Die von dem U-förmigen Abschnitt nach außen abgekanteten Montageflansche, die einem solchen Rinnenverbinder die hutförmige Kontur in einer Seitenansicht verleihen, liegen auf dem Unterboden auf und werden an diesem mit geeigneten Befestigern festgelegt. Auf diese Weise kann unter Verwendung eines einzigen Rinnenverbinders, der die beiden Stöße von zwei längsseitig zueinander angeordneten Kabelrinnen überspannt, bodenseitig festgelegt.

EP 2 590 281 B1 offenbart einen Leitungsführungskanal aus Metall mit einer Haube zur Schnittkaschierung zweier stoßseitig aneinander grenzender Kabelrinnen. Zum Zwecke einer Kaschierung der aneinander grenzenden Stöße zweier Kabelrinnen ist eine im Querschnitt U-förmige Haube vorgesehen. Diese ist nach Art eines Deckels ausgeführt, wobei dessen Schenkel sich zum Kaschieren des Stoßes über die gesamte Höhe der Kabelrinne erstrecken. Diese Kaschierungshaube überspannt den Stoß der beiden aneinander grenzenden und mit einem Deckel verschlossenen Kabelrinnen. Diese Haube trägt innenseitig an ihren Schenkeln Rastvorsprünge, damit diese in einem der Längserstreckung der Kabelrinne folgenden Verankerungskanal eingreifen, und zwar in denjenigen Kanal, in den auch die Deckelelemente in entsprechender Weise festgelegt sind.

Ein Kanal für elektrische Leiter ist aus US 1 676 486 A bekannt. Dieser Kanal ist als geschlossenes Hohlprofil ausgeführt. Zum Überspannen eines Stoßes zweier aneinander grenzender Kabelrinnen wird eine U-förmige Klammer aus Federstahl verwendet. Zum Festlegen der Kabelrinnen an einer Gebäudebegrenzungsfläche dienen die Kabelrinne überspannende Bügel mit längsseitig abgestellten Befestigungslaschen. Ein diesbezüglich ähnlich aufgebauter Kabelkanal mit entsprechendem Kanalverbinder ist auch aus US 2007/0044988 A1 bekannt.

KR 2006 0058230 A beschreibt ein weiteres Kabelkanalsystem, bei dem Eckstücke und Kabelkanalverzweigungen über Rinnenverbinder miteinander verbunden werden. Diese übergreifen haubenartig die bereits mit einem Deckel verschlossenen einzelnen Kabelrinnensegmente.

Gemäß einer anderen Ausgestaltung ist der Rinnenverbinder zusätzlich mit einer Bodenplatte ausgerüstet, die an die seitlich auskragenden Laschen des Bügels angeschlossen ist und diese verbindet. Dieser Rinnenverbinder ist umfänglich geschlossen. Während bei der ersten Ausgestaltung zunächst die Kabelrinnen bodenseitig entsprechend dem vorgesehenen Verlauf des zu erstellenden Leitungsführungsverlaufes verlegt werden, um anschließend an den Stößen die bügelartigen Rinnenverbinder zu montieren und damit das Kabelrinnensystem bodenseitig zu fixieren, ist es bei der zuletzt beschriebenen Ausgestaltung des Rinnenverbinders erforderlich, dass die Endabschnitte der miteinander zu verbindenden Kabelrinnen in den von den Rinnenverbindern eingefassten Aufnahmeraum eingeschoben werden oder umgekehrt der Rinnenverbinder auf einen Endabschnitt einer Kabelrinne aufgeschoben wird. Ein solcher Rinnenverbinder eignet sich zur Ausbildung eines Potentialausgleiches und somit für eine diesen Zwecken genügende elektrisch leitende Verbindung. Bei diesem Kabelrinnensystem verfügen die Kabelrinnen beidseitig über in Verlängerung ihrer Bodenplatte abragende Falze, die in einen entsprechenden Hinterschnitt des Rinnenverbinders eingreifen. Bei der Zusammenstellung des Kabelrinnensystems müssen diese Rinnenverbinder in die Kabelrinnenverlegung eingearbeitet werden.

Eine Vorinstallation von Kabeln mit geöffnetem Deckel ist bei den vorbeschriebenen Kabelrinnensystemen nicht möglich, jedenfalls dann nicht, wenn die Kabelrinnen begrenzungsflächenseitig, also beispielsweise bodenseitig, festgelegt sind. Wenn der Rinnenverbinder bodenseitig festgelegt ist, kann eine Kabelbestückung nur noch durch Einziehen der Kabel in die geschlossene Kabelrinne erfolgen.

Ausgehend von dem eingangs gewürdigten Stand der Technik liegt der Erfindung daher die Aufgabe zugrunde, ein Kabelrinnensystem vorzuschlagen, welches nicht nur hinsichtlich seiner Montage vereinfacht ist, sondern mit dem eine Bestückung des aus den Kabelrinnen gebildeten Kabelrinnensystems, beispielsweise im Zusammenhang mit einer Unterflurinstallation trotz bodenseitiger Festlegung der Kabelrinnen mit geöffneten Deckelteilen möglich ist.

Gelöst wird diese Aufgabe erfindungsgemäß durch ein eingangs genanntes, gattungsgemäßes Kabelrinnensystem mit den Merkmalen des Anspruchs 1.

Bei diesem Kabelrinnensystem verfügt der Rinnenverbinder über eine Bodenplatte und zwei daran angeschlossene, beispielsweise daran angeformte oder durch eine Fügeverbindung daran angeschlossene Seitenteile. Diese sind in Richtung der Breite der aufzunehmenden Kabelrinnen voneinander beabstandet. Der Abstand der beiden Seitenteile ist ausgelegt, damit darin eine Kabelrinne mit ihrer Breite eingesetzt werden kann und darin gehalten ist. Durch die Seitenteile und die Bodenplatte ist eine nach oben offene Kabelrinnenaufnahme bereitgestellt. In diese sind die miteinander zu verbindenden Kabelrinnen einsetzbar. Die Seitenteile des Rinnenverbinders tragen jeweils wenigstens einen in die Kabelrinnenaufnahme vorspringenden Rastvorsprung. Durch diesen ist in Richtung zur Bodenplatte hin ein Hinterschnitt gebildet. Der Hinterschnitt führt in Richtung von der Bodenplatte weg, sodass ein in den Hinterschnitt eingreifendes komplementäres Teil in Richtung von der Bodenplatte weg formschlüssig darin gehalten ist. Die Kabelrinnen selbst sind an die Kontur der Seitenteile des Rinnenverbinders angepasst und verfügen zumindest in den Endabschnitten ihrer Seitenwandholme über einen nach außen gerichteten Vorsprung. Die von den beiden Seitenwandholmen voneinander wegweisenden Vorsprünge sind ausgelegt, damit diese in die durch die Seitenteile des Rinnenverbinder gebildeten, einander gegenüberliegenden Hinterschnitte eingreifen, und zwar dann, wenn eine solche Kabelrinne an dem Rinnenverbinder montiert ist. Daher ist eine Montage einer Kabelrinne an einen solchen Rinnenverbinder von oben möglich. Die Verbindung von Kabelrinne und Rinnenverbinder erfolgt über eine Rastverbindung. Festgelegt ist damit die Kabelrinne an dem an einer Gebäudebegrenzungsfläche festgelegten oder festlegbaren Rinnenverbinder in vertikaler Richtung wirkend. Im zusammengebauten Zustand befindet sich der Rinnenverbinder somit außenseitig bezüglich der durch diesen zu verbindenden Kabelrinnen. Infolge der Rastverbindung zwischen Kabelrinne und Rinnenverbinder sind für diese Befestigung grundsätzlich keine zusätzlichen Befestiger oder anderweitige Verbindungsmittel erforderlich, jedenfalls dann nicht, wenn an die elektrische Kontaktierung zwischen dem Rinnenverbinder und einer darin eingesetzten Kabelrinne keine erhöhten Anforderungen an die elektrische Übertragung gestellt sind. Bei der Montage der Kabelrinnen in die Kabelrinnenaufnahme der Rinnenverbinder werden die elastischen Eigenschaften der Verbindungspartner für die Erstellung der Rastverbindung zum Einbringen der außenseitigen Vorsprünge der Seitenwandholme in die durch die Rastvorsprünge der Seitenteile bereitgestellten Hinterschnitte des für die Ausbildung des Rinnenverbinders und/oder der Kabelrinnen eingesetzten Materials genutzt. Typischerweise reagieren die Seitenteile mit einer gewissen Materialelastizität in Richtung der Breite der Kabelrinnenaufnahme. Ergänzend oder auch anstelle der Elastizität der Seitenteile können die Materialeigenschaften des Bodenbleches der darin zu montierenden Kabelrinne zur Möglichkeit der Rastmontage einer Kabelrinne an dem Rinnenverbinder genutzt werden. Die Böden einer solchen Kabelrinne sind typischerweise aus einem dünnen Blech hergestellt und können für die Montage in einem solchen Rinnenverbinder nach innen zum Einbringen der nach außen vorstehenden Vorsprünge der Seitenwandholme in die Hinterschnitte der Seitenteile eingewölbt werden. Typischerweise sind die Kabelrinnen an dem Rinnenverbinder infolge der Rastverbindung auch reibschlüssig in längsaxialer Richtung gehalten. Hergestellt werden die Kabelverbinder und die Kabelrinnen typischerweise aus einem verzinkten Eisenmetall. Dieses Material hat die für die Montage vorbeschriebenen notwendigen elastischen Eigenschaften. Der Rinnenverbinder kann vor der Montage der einen oder auch der beiden Kabelrinnen bodenseitig festgelegt sein. Eine solche Festlegung ist allerdings auch zu einem späteren Zeitpunkt möglich. Dennoch sind auch bei nicht bodenseitig festgelegtem Rinnenverbinder die beiden Kabelrinnen miteinander verbunden. Somit können mehrere, durch jeweils einen solchen Rinnenverbinder verbundene Kabelrinnen als Kabelrinnensystemsegment in ihre gewünschte Position geschoben werden, bevor der Rinnenverbinder bodenseitig festgelegt werden.

Der Rinnenverbinder übergreift die Kabelrinnen oberseitig typischerweise nicht. Diese überspannen lediglich den Stoß mit ihrer Bodenplatte und den Seitenteilen. Die Länge der Seitenteile entspricht typischerweise der Breite der Bodenplatte des Rinnenverbinders. Dies bedeutet, dass zwei durch einen solchen Rinnenverbinder verbundene Kabelrinnen oberseitig geöffnet sein können. Eine Installation von Kabeln kann auch bei bereits verlegten und bodenseitig festgelegten Kabelrinnen bei geöffnetem Deckelteil erfolgen. Im Falle einer Unterflurinstallation können Kabel oder andere Leitungen damit bereits vor dem Aufbringen des Estrichs eingelegt werden. Es versteht sich, dass vor einem Aufbringen des Estrichs die Deckelteile der Kabelrinnen geschlossen werden. Hierdurch ist die Handhabbarkeit der Kabelrinnen nicht nur im Zusammenhang mit der Ausbildung eines Kabelrinnensystems, sondern auch in Bezug auf eine Kabelinstallation gegenüber herkömmlichen Kabelrinnensystemen vereinfacht.

Auch wenn vorstehend das erfindungsgemäße Kabelrinnensystem anhand einer bodenseitigen Festlegung seines zumindest einen Rinnenverbinders beschrieben worden ist, versteht es sich, dass dieselben Montagevorteile sich auch bei einer wand- oder deckenseitigen Montage einstellen. Aus diesem Grunde ist vorstehend allgemein auf eine Begrenzungsfläche eines Gebäudes, und zwar bei den beschriebenen Beispielen einen Boden Bezug genommen.

Wenn ein Potentialausgleich zwischen einer solchen Kabelrinne und der Rinnenverbinder gewünscht ist, ist in einer Ausgestaltung der Erfindung vorgesehen, dass der Rastvorsprung der Seitenteile einen den Hinterschnitt oberseitig begrenzenden Wandabschnitt umfasst, der zum äußeren randlichen Abschluss des Rinnenverbinders hin geneigt ist. Diese bewirkt als Stellfläche, dass der darin eingreifende Vorsprung eines Seitenwandholms entsprechend der Neigung bestrebt ist, gegen die Bodenplatte des Rinnenverbinders gedrückt zu werden, mithin unter Vorspannung an dieser anliegt. Dieses gewährleistet die gewünschte elektrische Kontaktierung. Verbessert werden kann dieser Aspekt dadurch, dass auch der Vorsprung der Seitenwandholme oberseitig einen Wandabschnitt aufweist, der gleichsinnig wie die vorbeschriebenen Wandabschnitte der Seitenteile geneigt ist. Um dieses zu erreichen, können die Seitenwandholme der Kabelrinnen beispielsweise durch eine ihrer Längserstreckung folgende Profilierung mit trapezförmiger Querschnittsfläche bereitgestellt sein. Der geneigte Wandabschnitt ist dann durch den oberen geneigten Schenkel einer solchen Profilierung bereitgestellt. In die Ausbildung der Vorsprünge der Seitenwandholme ist typischerweise das Bodenblech der Kabelrinnen einbezogen, ist mithin an der Ausbildung des Vorsprunges beteiligt. Bei dieser Ausgestaltung befinden sich die Vorsprünge der Seitenwandholme am unteren Abschluss der Kabelrinne.

Zur weiteren Verbesserung einer elektrisch leitenden Kontaktierung zwischen einer Kabelrinne und dem Rinnenverbinder ist gemäß einem Ausführungsbeispiel vorgesehen, dass die Bodenplatte des Rinnenverbinders im Bereich der für jede Kabelrinne vorgesehenen Aufnahme ein oder mehrere nach oben abragende Vorsprünge als elektrische Kontaktstellen aufweist. Typischerweise sind mehrere derartiger Kontaktstellen vorgesehen, zumindest zwei. Diese befinden sich vorzugsweise spiegelsymmetrisch zur Längsachse der darin einzusetzenden Kabelrinne. Diese Kontaktstellen sorgen für eine Konzentration der in Richtung zur Bodenplatte des Rinnenverbinders wirkenden Vorspannung, was die Dauerhaftigkeit der elektrischen Kontaktierung begünstigt. Die Kontaktstellen sind mit einer gewissen Kontaktfläche ausgestattet. Gemäß einem Ausführungsbeispiel sind die die Kontaktstellen bildenden Vorsprünge durch aus der Bodenplatte ausgestellte Kontaktlaschen gebildet. Hierbei handelt es sich typischerweise um an drei Seiten von der Bodenplatte getrennte Laschen, die in Richtung der Kabelrinnenaufnahme ausgestellt sind. Bei einer solchen Auslegung sind die Kontaktlaschen selbst in einem gewissen Maße elastisch nachgiebig, sodass in Zusammenwirkung mit der Verrastung der Kabelrinnen in den Rinnenverbinder nicht nur der erforderliche Kontaktdruck für eine elektrische Kontaktierung für einen Potentialausgleich gegeben ist, sondern zugleich auch für die Dauerhaftigkeit einer solchen Kontaktierung auch bei thermischen Längenausdehnungen gesorgt ist. Ferner wird durch diese Maßnahme die mechanische Verbindung zwischen den Kabelrinne und dem Rinnenverbinder gegenüber einem Herausziehen der Kabelrinne aus der Kabelrinnenaufnahme des Rinnenverbinders verbessert.

Diese Kabelrinnen können mit Verklammerungskonturen an der Oberseite ihrer Seitenwandholme für die Verklammerung mit einem Deckelteil ausgerüstet sein. Gemäß einem Ausführungsbeispiel ist der obere Abschluss der Seitenwandholme außenseitig durch einen der Längserstreckung folgenden Rastkanal hinterschnitten. Das einer solchen Kabelrinne zugeordnete Deckelteil verfügt über einen nach innen gerichteten Rastvorsprung, der bei auf eine solche Kabelrinne aufgesetzten Deckelteil in den Rastkanal der Seitenwandholme eingreift.

Die Erfindung ist nachstehend anhand eines Ausführungsbeispiels unter Bezugnahme auf die beiliegenden Figuren beschrieben. Es zeigen:
- **Fig. 1:**: Eine perspektivische Ansicht eines Teils einer Kabelrinne und eines Rinnenverbinders als Teil eines Kabelrinnensystems,
- **Fig. 2:**: einen Teilquerschnitt durch den Rinnenverbinder der Figur 1 entlang der Linie A-B,
- **Fig. 3:**: eine perspektivische Ansicht der beiden Teile des Kabelrinnensystems der Figur 1 in miteinander montiertem Zustand und
- **Fig. 4:**: eine Stirnseitenansicht des rechten Bereiches der Anordnung der Figur 3.

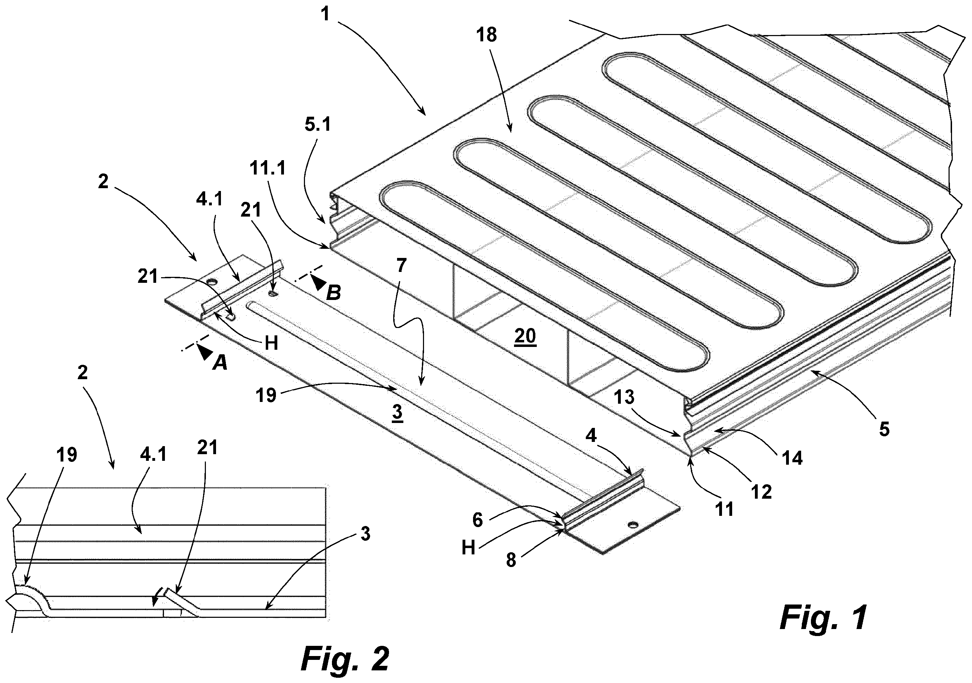

Ein Kabelrinnensystem umfasst mehrere Kabelrinnen, von denen in Figur 1 lediglich eine Kabelrinne 1 gezeigt ist. Die Kabelrinne 1 ist in der Figur nur mit ihrem gezeigten Endabschnitt abgebildet. Dem Kabelrinnensystem zugehörig ist des Weiteren ein Rinnenverbinder 2. Der Rinnenverbinder 2 dient zum längsseitigen Verbinden von zwei Kabelrinnen 1. Der Rinnenverbinder 2 verfügt über eine Bodenplatte 3, die sich über die Breite der Kabelrinne 1 hinaus erstreckt. Die Bodenplatte 3 trägt zwei Seitenteile 4, 4.1. Die Längserstreckung der beiden Seitenteile 4, 4.1 folgt der Längserstreckung der Kabelrinne 1. Die beiden Seitenteile 4, 4.1 sind voneinander beabstandet, und zwar derart, dass die Kabelrinne 1 zwischen den beiden Seitenteilen 4, 4.1 positioniert werden kann und mit einem Endabschnitt ihrer Seitenwandholme 5, 5.1 überlappen.

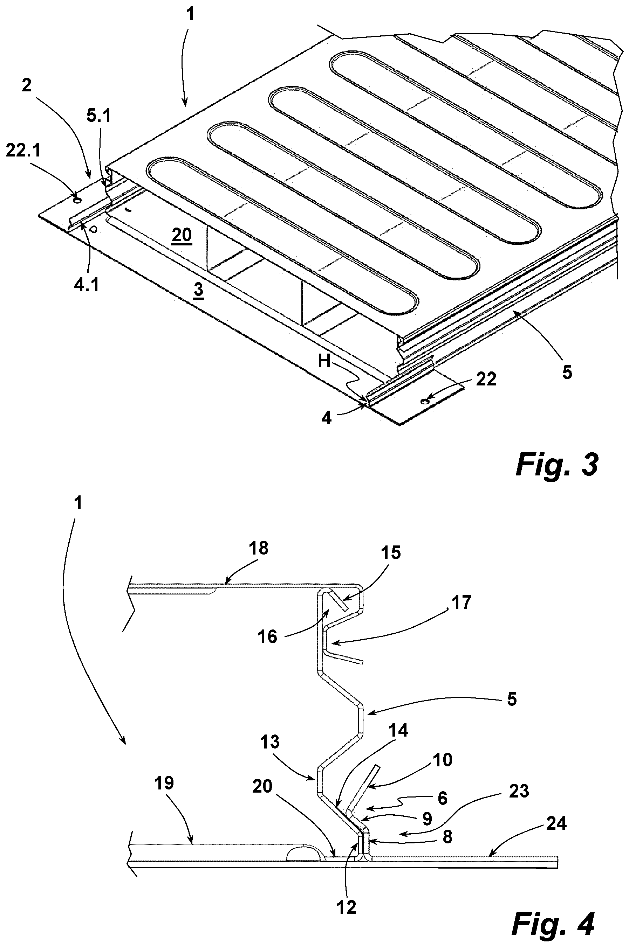

Nachfolgend ist das Seitenteil 4 detaillierter beschrieben. Das Seitenteil 4.1 ist genauso aufgebaut. Daher gelten die nachstehenden Ausführungen zu dem Seitenteil 4 ebenfalls für das Seitenteil 4.1. Das Seitenteil 4 ist in Hochrichtung profiliert, und zwar unter Ausbildung eines Rastvorsprunges 6. Der Rastvorsprung 6 weist in Richtung der von den Seitenteilen 4, 4.1 seitlich eingefassten Kabelrinnenaufnahme 7. Diese ist unterseitig durch die Bodenplatte 3 begrenzt. Der Rastvorsprung 6 ist an einen ersten vertikal verlaufenden Seitenteilabschnitt 8 angeformt. Der Rastvorsprung 6 bildet zusammen mit dem Seitenteilabschnitt 9 einen in Richtung von der Bodenplatte 6 weg wirkenden Hinterschnitt H. Der Rastvorsprung 6 selbst ist durch eine V-förmige Profilierung gebildet, wodurch sein unterer Schenkel 9 in Richtung zu dem äußeren Abschluss des Rinnenverbinders 2 geneigt ist (s. auch Figur 4). Der andere Schenkel 10 des Rastvorsprunges 6 ist in die entgegengesetzte Richtung geneigt. Sein freies Ende befindet sich außerhalb der außenseitigen vertikalen Flucht des Seitenwandholms 5 der Kabelrinne 1, wenn diese mit ihren äußeren unteren Kanten 11, 11.1 auf die Seitenteile 4, 4.1 aufgesetzt ist, mithin auf die Schenkel 10 wirkt. Damit wirken die Schenkel 10 als Stellfläche, durch die die beiden Seitenteile 4, 4.1 elastisch voneinander weg bewegt werden, wenn die Kabelrinne 1 von oben in die Kabelrinnenaufnahme 7 eingesetzt wird. Unterstützt wird die hierdurch bewirkte Aufweitung der Seitenteile 4, 4.1 auch durch den Radius der unteren seitlichen Kanten 11, 11.1 der Kabelrinne 1.

Die Seitenwandholme 5, 5.1 der Kabelrinne 1 sind ebenfalls identisch, sodass die nachfolgenden Ausführungen zu dem Seitenwandholm 5 gleichermaßen für den Seitenwandholm 5.1 gelten. Der Seitenwandholm 5 ist profiliert und verfügt über eine an einen unteren vertikalen Abschnitt 12 angeformte Trapez-Profilierung 13, durch die eine nach außen hin offene Nut als Rastvertiefung ausgebildet ist. Der untere Schenkel 14 der Trapez-Profilierung 13 ist gleichsinnig geneigt wie der untere Schenkel 9 des Rastvorsprunges 6 des Seitenteils 4 (s. auch Figur 4). Zusammen mit dem daran angeformten Abschnitt 12 der Profilierung 13 greift der Seitenwandholm 5 in den Hinterschnitt H des Seitenteils 4 des Rinnenverbinders 2 ein. Damit stellt dieser untere Abschnitt des Seitenwandholms 5 das Komplementär zu dem Rastvorsprung 6 mit seinem Hinterschnitt H für eine Rastmontage der beiden Elemente dar.

Der Seitenwandholm 5 verfügt des Weiteren über eine Profilierung im Bereich seines oberseitigen Abschlusses, und zwar durch Ausbildung eines Rasthakens 15. Dieser ist nach außen abgestellt und nach unten geneigt. Durch den Rasthaken 15 ist ein Hinterschnitt 16 gebildet, in den der Rastarm 17 eines Deckelteils 18 eingreift (s. Figur 4).

Der Rinnenverbinder 2 verfügt bei dem dargestellten Ausführungsbeispiel über einen, sich weitgehend über die Breite der Kabelrinnenaufnahme 7 erstreckenden Wulst 19. Dieser ist gekrümmt (s. Figur 2). Der Wulst 19 ist das Ergebnis einer sickenartigen Verprägung der Bodenplatte 3 in Richtung zu der Kabelrinnenaufnahme 7 hin. Die Höhe des Wulstes 19 ist größer als die Materialstärke des Bodenbleches 20 der Kabelrinne 1.

Der Rinnenverbinder 2 verfügt des Weiteren über mehrere Kontaktvorsprünge 21, von denen jeweils 2 in der jeder Kabelrinne zugeordneten Kabelrinnenteilaufnahme angeordnet sind. Die Kontaktvorsprünge 21 sind von dem Wulst 19 in Richtung zu dem längsseitigen Abschluss der Kabelrinnenaufnahme 7 versetzt. Bei dem dargestellten Ausführungsbeispiel sind die Kontaktvorsprünge 21 als aus der Bodenplatte 3 ausgeklingte Laschen (s. Figur 2) ausgeführt. Ausgebildet werden diese durch einen dreiseitigen Schnitt, sodass die Lasche nur an einer Seite an der Bodenplatte 3 angeformt bleibt. Die als Laschen ausgebildeten Kontaktvorsprünge 21 sind in die Kabelrinnenaufnahme 7 hinein ausgestellt und weisen mit ihrem ausgestellten freien Ende in Richtung zu dem Wulst 19 (s. Figur 2). Die Materialelastizität erlaubt eine elastische Nachgiebigkeit der ausgestellten Kontaktvorsprünge 21, wie in Figur 2 anhand eines Pfeiles angedeutet. Beim Einsetzen der Kabelrinne 1 in die Kabelrinnenaufnahme 7 des Rinnenverbinders 2 wirken jeweils zwei Kontaktvorsprünge 21 gegen die Unterseite des Bodenbleches 20 der Kabelrinne 1 und werden durch diese elastisch in Richtung der Ebene der Bodenplatte 3 des Rinnenverbinders 2 deformiert. Vor dem Hintergrund der Ausrichtung der Kontaktvorsprünge 21, mit ihrem offenen Ende in Richtung des Wulstes 19 weisend, wirken diese zugleich als Widerhaken, um ein unbeabsichtigtes Herausziehen einer Kabelrinne 1 aus der Kabelrinnenaufnahme 7 des Rinnenverbinders 2 zu verhindern.

Eingesetzt wird die Kabelrinne 1 in den Rinnenverbinder 2 durch Einführen derselben von oben in die Rinnenaufnahme 7. Infolge der Materialelastizität der Seitenteile 4, 4.1 sowie des Bodenbleches 20 der Kabelrinne 1 wird die Kabelrinne 1 somit in die Kabelrinnenaufnahme 7 eingeclipst. Die an dem Rinnenverbinder 2 montierte Kabelrinne 1 ist in Figur 3 gezeigt. In dieser Stellung wirkt das Bodenteil 20 gegen die Kontaktvorsprünge 21, die in Richtung der Bodenplatte 3 nach unten gedrückt werden. Zugleich liegt der Schenkel 9 des Rastvorsprunges 6 an dem Schenkel 14 der Trapez-Profilierung 13 des Seitenwandholmes 5 an. Aufgrund der Neigung dieser beiden Schenkel 9,14 wird die Kabelrinne 1 in Richtung zur Bodenplatte 3 des Rinnenverbinders 2 und damit gegen die Kontaktvorsprünge 21 gedrückt. Damit ist der durch das Bodenblech 20, den unteren vertikalen Abschnitt 12 und den Schenkel 14 der Trapez-Profilierung gebildete unterseitige seitliche Vorsprung der Kabelrinne 1 zwischen dem Rastvorsprung 6 und den Kontaktvorsprüngen 21 bzw. der Bodenplatte 3 eingespannt. Auf diese Weise ist die Kabelrinne 1 nicht nur spielfrei an den Rinnenverbinder 2 angeschlossen. Die aus der Verbindung resultierende Vorspannung gewährleistet auch einen für einen Potentialausgleich zwischen der Kabelrinne 1 und dem Rinnenverbinder 2 ausreichenden elektrischen Übergang. Auf die damit bewirkte mechanische Verbindung zwischen Kabelrinne 1 und Rinnenverbinder 2 ist bereits eingegangen worden.

Die Verbindung zwischen der Kabelrinne 1 und dem Rinnenverbinder 2 ist im Detail in der Stirnseitenansicht der Figur 4 erkennbar. Durch den Wulst 19, dessen Höhe die Materialstärke des Bodenbleches 20 der Kabelrinne 1 überschreitet - auch unter Berücksichtigung einer gewissen Höhentoleranz in Bezug auf das Maß der Deformation der Kontaktvorsprünge 21 -, ist die Stirnseite des Bodenbleches verblendet. Die beiden mit dem Rinnenverbinder 2 zu verbindenden Kabelrinnen 1 sind somit durch den Wulst 19 getrennt. Dieser schützt ein in das Innere der Kabelrinne 1 einzuziehendes Kabel vor möglichen Beschädigungen an den Kanten der Stirnseite des Bodenbleches 20. Zugleich verleiht der Wulst 19 dem Rinnenverbinder 2 eine Stabilität gegenüber Verbiegungen, wodurch die Bodenplatte 3 in Breitenrichtung der Kabelrinnenaufnahme 7 ausgesteift ist. Damit ist der Rinnenverbinder 2 formstabil, auch ohne dass dieser beispielsweise bodenseitig festgelegt ist. Einer Festlegung des Rinnenverbinders 2 dient jeweils eine in den außerhalb der Seitenteile 4, 4.1 befindlichen Abschnitt eingebrachte Befestigungsöffnung 22, 22.1.

Die Stirnseitenansicht der aus Kabelrinne 1 und Rinnenverbinder 2 gebildeten Anordnung in Figur 4 zeigt, dass das Seitenteil 4 Teil eines Winkelstücks 23 ist, dessen zweiter Schenkel 24 auf der Oberseite der Bodenplatte 3 aufliegt und mit dieser gefügt ist.

Bei dem dargestellten Ausführungsbeispiel sind die Kabelrinne 1 und der Rinnenverbinder 2 aus einem für derartige Teile eines Leitungsführungssystems üblichen, verzinkten Eisenmetall hergestellt.

Die zu dem Rinnenverbinder 2 vorbeschriebenen, als Kontaktaschen ausgebildeten Kontaktvorsprünge 21 sind in Richtung zu dem Wulst 19 ausgestellt. Dieses erlaubt eine Montage einer Kabelrinne an dem Rinnenverbinder auch durch längsaxiales Einschieben in die Kabelrinnenaufnahme 7.

Die Beschreibung des Ausführungsbeispiels verdeutlicht, dass zwei Kabelrinnen eines Kabelrinnensystems mit dem Rinnenverbinder auch ohne Deckelteil verbunden werden können und die Kabelrinnen dennoch an dem Rinnenverbinder montiert sind. Bei diesem Kabelrinnensystem kann eine Vormontage zwischen Kabelrinnen und Kabelrinnenverbindern vorgenommen werden, bevor Letztere an der Begrenzungsfläche eines Gebäudes, beispielsweise einem Unterboden festgelegt werden. Dieses vereinfacht eine Verlegung und damit die Ausbildung des gewünschten Leitungsführungssystems. Überdies erlaubt dieses Kabelrinnensystem, dass sich ein Deckelteil über den Stoß zweier auf diese Weise verbundenen Kabelrinnen erstrecken kann.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen näher dargelegt werden müsste.

### Bezugszeichenliste

- 1: Kabelrinne
- 2: Rinnenverbinder
- 3: Bodenplatte
- 4, 4.1: Seitenteil
- 5, 5.1: Seitenwandholm
- 6: Rastvorsprung
- 7: Kabelrinnenaufnahme
- 8: Seitenteilabschnitt
- 9: Schenkel
- 10: Schenkel
- 11, 11.1: Kante
- 12: Abschnitt
- 13: Trapez-Profilierung
- 14: Schenkel
- 15: Rasthaken
- 16: Hinterschnitt
- 17: Rastarm
- 18: Deckelteil
- 19: Wulst
- 20: Bodenblech
- 21: Kontaktvorsprung
- 22: Befestigungsöffnung
- 23: Winkelstück
- 24: Schenkel
- H: Hinterschnitt

## Patentansprüche

1. An einer Begrenzungsfläche eines Gebäudes, etwa eines Bodens, festlegbares Kabelrinnensystem, umfassend mindestens zwei miteinander längsseitig zu verbindende, jeweils zwei Seitenwandholme (5, 5.1) und ein die Seitenwandholme (5, 5.1) verbindendes Bodenblech (20) umfassende Kabelrinnen (1) und einen an der Begrenzungsfläche festlegbaren, die Stöße der beiden Kabelrinnen (1) überspannenden Rinnenverbinder (2), wobei zwei durch einen Rinnenverbinder (2) verbundene Kabelrinnen (1) von der Begrenzungsfläche wegweisend geöffnet sind, wobei der Rinnenverbinder (2) eine sich über die Breite der Kabelrinnen (1) erstreckende Bodenplatte (3) und zwei daran angeschlossene, voneinander in Richtung der Breite der Kabelrinnen (1) beabstandete Seitenteile (4, 4.1) aufweist, durch die zusammen mit der Bodenplatte (3) eine von der Begrenzungsfläche wegweisend offene Kabelrinnenaufnahme (7) bereitgestellt ist, in die die miteinander zu verbindenden Kabelrinnen (1) einsetzbar oder eingesetzt sind, so dass der Rinnenverbinder (2) außenseitig zu den Kabelrinnen (1) so anordenbar ist, dass die Seitenteile (4, 4.1) des Rinnenverbinders (2) jeweils zumindest einen in die Kabelrinnenaufnahme (7) vorspringenden Rastvorsprung (6) mit einem in Richtung zur Bodenplatte (3) gebildeten und in entgegengesetzter Richtung wirkenden Hinterschnitt (H) aufweisen und dass die Kabelrinnen (1) zumindest in den Endabschnitten ihrer Seitenwandholme (5, 5.1) jeweils einen nach außen gerichteten Vorsprung tragen, der bei an dem Rinnenverbinder (2) montierter Kabelrinne (1) in die durch die Rastvorsprünge (6) der beiden Seitenteile (4, 4.1) gebildeten Hinterschnitte (H) eingreift, **dadurch gekennzeichnet, dass** der Rinnenverbinder (2) sich über die Breite der Kabelrinnen (1) hinaus erstreckt und außenseitig zu seinen Seitenteilen (4, 4.1) Befestigungsöffnungen (22, 22.1) zum Festlegen des Rinnenverbinders (2) an der Begrenzungsfläche mittels jeweils eines Befestigers aufweist.

2. Kabelrinnensystem nach Anspruch 1, **dadurch gekennzeichnet, dass** der Rastvorsprung (6) der Seitenteile (4, 4.1) einen den Hinterschnitt (H) oberseitig begrenzenden, zum äußeren randlichen Abschluss des Rinnenverbinders geneigten Wandabschnitt (10) aufweist.

3. Kabelrinnensystem nach Anspruch 2, **dadurch gekennzeichnet, dass** der obere Wandabschnitt (14) des nach außen gerichteten Vorsprunges der Seitenwandholme (5, 5.1) der Kabelrinnen (1) gleichsinnig geneigt ist wie der geneigte Wandabschnitt (9) der Rastvorsprünge (6) der Seitenteile (4, 4.1) des Rinnenverbinders (2).

4. Kabelrinnensystem nach einem der Ansprüche 1 bis 3, **dadurch gekennzeichnet, dass** die Vorsprünge der Seitenwandholme (5, 5.1) der Kabelrinnen (1) durch eine der Längserstreckung der Seitenwandholme (5, 5.1) folgende Profilierung mit trapezförmiger Querschnittsfläche bereitgestellt sind.

5. Kabelrinnensystem nach einem der Ansprüche 1 bis 4, **dadurch gekennzeichnet, dass** sich die Vorsprünge der Seitenwandholme (5, 5.1) der Kabelrinnen (1) bis zum Bodenblech (20) erstrecken.

6. Kabelrinnensystem nach einem der Ansprüche 1 bis 5, **dadurch gekennzeichnet, dass** der Rinnenverbinder (2) einen sich zwischen den Seitenteilen (4, 4.1) erstreckenden, sich von der Oberseite der Bodenplatte (3) erhebenden Wulst (19) mit einem gekrümmten Scheitel aufweist, dessen Höhe größer ist als die Materialstärke der Bodenbleche (20) der in die Kabelrinnenaufnahme (7) einzusetzenden Kabelrinnen (1).

7. Kabelrinnensystem nach Anspruch 6, **dadurch gekennzeichnet, dass** der Wulst (19) durch eine in die Unterseite der Bodenplatte (3) eingebrachte sickenartige Verprägung gebildet ist.

8. Kabelrinnensystem nach einem der Ansprüche 1 bis 7, **dadurch gekennzeichnet, dass** die Bodenplatte (3) des Rinnenverbinders (2) im Bereich des für jede Kabelrinne (1) vorgesehenen Aufnahmebereichs als Kontaktstellen zum Kontaktieren der Unterseite des Bodenbleches (20) einer Kabelrinne (1) vorgesehene Vorsprünge (21) aufweist.

9. Kabelrinnensystem nach Anspruch 8, **dadurch gekennzeichnet, dass** die als Kontaktstellen dienenden Vorsprünge (21) in dem für die Aufnahme jeweils einer Kabelrinne (1) vorgesehenen Bereich symmetrisch zur Mittellängsachse einer darin einzusetzenden Kabelrinne (1) angeordnet sind.

10. Kabelrinnensystem nach Anspruch 8 oder 9, **dadurch gekennzeichnet, dass** die als Kontaktstellen dienenden Vorsprünge (21) durch aus der Bodenplatte (3) ausgestellte Kontaktlaschen gebildet sind.

11. Kabelrinnensystem nach Anspruch 10, **dadurch gekennzeichnet, dass** die Kontaktlaschen an drei Seiten von der Bodenplatte (3) des Rinnenverbinders (2) getrennt sind.

12. Kabelrinnensystem nach einem der Ansprüche 1 bis 11, **dadurch gekennzeichnet, dass** der obere Abschluss der Seitenwandholme (5, 5.1) der Kabelrinnen (1) einen der Längserstreckung folgenden Hinterschnitt (16) aufweist und dass den Kabelrinnen (1) jeweils ein Deckelteil (18) zugeordnet ist, das zur Befestigung an einer Kabelrinne (1) mit einem Rastarm (17) in den Hinterschnitt (16) der Seitenwandholme (5, 5.1) eingreift.

## Claims

1. A cable channel system to be fixed to a boundary surface of a building, for example a floor, comprising at least two cable channels (1) which are to be connected to one another longitudinally and each comprise two side wall spars (5, 5.1) and a base plate (20) connecting the side wall spars (5, 5.1), and a channel connector (2) which can be fixed to the boundary surface and spans the joints of the two cable channels (1), wherein two cable channels (1) connected by a channel connector (2) are open facing away from the boundary surface, wherein the channel connector (2) has a base plate (3) extending over the width of the cable channels (1) and two side parts (4, 4.1) connected thereto and spaced from one another in the direction of the width of the cable channels (1), by means of which, together with the base plate (3), a cable channel receptacle (7) which is open facing away from the boundary surface is provided, into which the cable channels (1) to be connected can be or are inserted, so that the channel connector (2) can be arranged on the outside of the cable channels (1) in such a way that the side parts (4, 4.1) of the channel connector (2) each have at least one locking projection (6) projecting into the cable channel receptacle (7) and having an undercut (H) formed in the direction of the base plate (3) and acting in the opposite direction, and that the cable channels (1), at least in the end sections of their side wall spars (5, 5.1), each have an outwardly directed projection which, when the cable channel (1) is mounted on the channel connector (2), engages in the undercuts (H) formed by the locking projections (6) of the two side parts (4, 4.1), **characterized in that** the channel connector (2) extends beyond the width of the cable channels (1) and has fastening openings (22, 22.1) for fixing the channel connector (2) to the boundary surface by means of a respective fastener on the outer side of its side parts (4, 4.1).

2. The cable channel system according to claim 1, **characterized in that** the locking projection (6) of the side parts (4, 4.1) has a wall section (10) which delimits the undercut (H) on the upper side and is inclined towards the outer edge of the channel connector.

3. The cable channel system according to claim 2, **characterized in that** the upper wall section (14) of the outwardly directed projection of the side wall spars (5, 5.1) of the cable channels (1) is inclined in the same direction as the inclined wall section (9) of the locking projections (6) of the side parts (4, 4.1) of the channel connector (2).

4. The cable channel system according to any one of claims 1 to 3, **characterized in that** the projections of the side wall spars (5, 5.1) of the cable channels (1) are provided by a profiling with a trapezoidal cross-sectional area following the longitudinal extent of the side wall spars (5, 5.1).

5. The cable channel system according to any one of claims 1 to 4, **characterized in that** the projections of the side wall spars (5, 5.1) of the cable channels (1) extend to the base plate (20).

6. The cable channel system according to any one of claims 1 to 5, **characterized in that** the channel connector (2) has a bead (19) extending between the side parts (4, 4.1) and rising from the upper side of the base plate (3) with a curved apex, the height of which is greater than the material thickness of the base plates (20) of the cable channels (1) to be inserted into the cable channel receptacle (7).

7. The cable channel system according to claim 6, **characterized in that** the bead (19) is formed by a corrugation-like embossing introduced into the underside of the base plate (3).

8. The cable channel system according to any one of claims 1 to 7, **characterized in that** the base plate (3) of the channel connector (2) has projections (21) provided in the region of the receiving region provided for each cable channel (1) as contact points for contacting the underside of the base plate (20) of a cable channel (1).

9. The cable channel system according to claim 8, **characterized in that** the projections (21) serving as contact points are arranged in the region provided for receiving a respective cable channel (1) symmetrically to the central longitudinal axis of a cable channel (1) to be inserted therein.

10. The cable channel system according to claim 8 or 9, **characterized in that** the projections (21) serving as contact points are formed by contact tabs projecting from the base plate (3).

11. The cable channel system according to claim 10, **characterized in that** the contact tabs are separated on three sides from the base plate (3) of the channel connector (2).

12. The cable channel system according to any one of claims 1 to 11, **characterized in that** the upper end of the side wall spars (5, 5.1) of the cable channels (1) has an undercut (16) following the longitudinal extent and **in that** the cable channels (1) are each assigned a cover part (18) which engages in the undercut (16) of the side wall spars (5, 5.1) with a locking arm (17) for fastening to a cable channel (1).

## Revendications

1. Système de chemin de câbles pouvant être fixé sur une surface de limitation d'un bâtiment, comme un sol, comprenant au moins deux chemins de câbles (1) à relier longitudinalement l'un à l'autre, chacun comprenant deux poutres de paroi latérale (5, 5.1) et une plaque de base (20) reliant les poutres de paroi latérale (5, 5.1), et un connecteur de chemin de câbles (2) qui peut être fixé à la surface de limitation et qui enjambe les joints des deux chemins de câbles (1), dans lequel deux chemins de câbles (1) reliés par un connecteur de chemin de câbles (2) sont ouverts face à la surface de limitation, dans lequel le connecteur de chemin de câbles (2) présente une plaque de base (3) s'étendant sur la largeur des chemins de câbles (1) et deux parties latérales (4, 4.1) reliées à celle-ci et espacées l'une de l'autre dans le sens de la largeur des chemins de câbles (1), parties à travers lesquelles, conjointement avec la plaque de base (3), un réceptacle de chemin de câbles (7) est prévu, ouvert et dirigé à l'opposé de la surface de limitation et dans lequel les chemins de câbles (1) à connecter peuvent être insérés ou sont insérés, de sorte que le connecteur de chemin de câbles (2) peut être disposé à l'extérieur des chemins de câbles (1), que les parties latérales (4, 4.1) du connecteur de chemin de câbles (2) présentent chacune au moins une saillie de verrouillage (6) faisant saillie dans le réceptacle du plateau de câbles (7) avec une contre-dépouille (H) formée en direction de la plaque de base (3) et agissant dans la direction opposée, et que les chemins de câbles (1) présentent chacun une saillie dirigée vers l'extérieur au moins dans les sections d'extrémité de leurs poutres latérales (5, 5.1), qui, lorsque le chemin de câbles (1) est monté sur le connecteur de chemin de câbles (2), vient en prise dans les contre-dépouilles (H) formées par les saillies de verrouillage (6) des deux parties latérales (4, 4.1), **caractérisé en ce que** le connecteur de chemin de câbles (2) s'étend au-delà de la largeur des chemins de câbles (1) et présente des ouvertures de fixation (22, 22.1) à l'extérieur de ses parties latérales (4, 4.1) pour fixer le connecteur de chemin de câbles (2) à la surface de limitation au moyen d'un élément de fixation respectif.

2. Système de chemin de câbles selon la revendication 1, **caractérisé en ce que** la saillie de verrouillage (6) des parties latérales (4, 4.1) présente une section de paroi (10) qui délimite la contre-dépouille (H) sur le côté supérieur et est inclinée vers le bord extérieur du connecteur de chemin de câbles.

3. Système de chemin de câbles selon la revendication 2, **caractérisé en ce que** la section de paroi supérieure (14) de la saillie dirigée vers l'extérieur des poutres de paroi latérale (5, 5.1) des chemins de câbles (1) est inclinée dans la même direction que la section de paroi inclinée (9) des saillies de verrouillage (6) des parties latérales (4, 4.1) du connecteur de chemin de câbles (2).

4. Système de chemin de câbles selon l'une des revendications 1 à 3, **caractérisé en ce que** les saillies des poutres de paroi latérale (5, 5.1) des chemins de câbles (1) sont réalisées par un profilage à section trapézoïdale suivant l'étendue longitudinale des poutres de paroi latérale (5, 5.1).

5. Système de chemin de câbles selon l'une des revendications 1 à 4, **caractérisé en ce que** les saillies des poutres de paroi latérale (5, 5.1) des chemins de câbles (1) s'étendent jusqu'à la plaque de base (20).

6. Système de chemin de câbles selon l'une des revendications 1 à 5, **caractérisé en ce que** le connecteur de chemin de câbles (2) comporte un bourrelet (19) s'étendant entre les parties latérales (4, 4.1) et s'élevant depuis le côté supérieur de la plaque de base (3) avec un sommet incurvé, dont la hauteur est supérieure à l'épaisseur de matériau des plaques de base (20) des chemins de câbles (1) à insérer dans le réceptacle de chemin de câbles (7).

7. Système de chemin de câbles selon la revendication 6, **caractérisé en ce que** le bourrelet (19) est formé par un gaufrage en forme de bourrelet introduit dans le côté inférieur de la plaque de base (3).

8. Système de chemin de câbles selon l'une des revendications 1 à 7, **caractérisé en ce que** la plaque de base (3) du connecteur de chemin de câbles (2) présente des saillies (21) prévues dans la zone de réception prévue pour chaque chemin de câbles (1) comme points de contact pour entrer en contact avec le côté inférieur de la plaque de base (20) d'un chemin de câbles (1).

9. Système de chemin de câbles selon la revendication 8, **caractérisé en ce que** les saillies (21) servant de points de contact sont disposées dans la zone prévue pour recevoir un chemin de câbles respectif (1) symétriquement à l'axe longitudinal central d'un chemin de câbles (1) à y insérer.

10. Système de chemin de câbles selon la revendication 8 ou 9, **caractérisé en ce que** les saillies (21) servant de points de contact sont formées par des languettes de contact faisant saillie depuis la plaque de base (3).

11. Système de chemin de câbles selon la revendication 10, **caractérisé en ce que** les languettes de contact sont séparées sur trois côtés de la plaque de base (3) du connecteur de chemin de câbles (2).

12. Système de chemin de câbles selon l'une des revendications 1 à 11, **caractérisé en ce que** l'extrémité supérieure des poutres de paroi latérale (5, 5.1) des chemins de câbles (1) présente une contre-dépouille (16) suivant l'étendue longitudinale et **en ce que** les chemins de câbles (1) sont chacun dotés d'une partie de recouvrement (18) qui vient en prise dans la contre-dépouille (16) des poutres de paroi latérale (5, 5.1) avec un bras de verrouillage (17) pour la fixation à un chemin de câbles (1).
